# EUROPÄISCHE PATENTSCHRIFT

(11) **EP 3 545 113 B1**
(45) Veröffentlichungstag und Bekanntmachung des Hinweises auf die Patenterteilung: **03.01.2024**
(21) Anmeldenummer: 17808035.4
(22) Anmeldetag: 17.11.2017
(51) Int. Cl.: C21D 9/48, C21D 9/00, C21D 1/34, C21D 9/08, F27B 9/06, F27B 9/36, F27B 9/40, F27D 17/00, C21D 1/673, C21D 1/42, C21D 1/52

(54) **VERFAHREN ZUR SCHNELLERWÄRMEN VON STAHLBLECH**
METHOD OF FAST-HEATING OF STEEL SHEET
PROCÉDÉ DE CHAUFFAGE RAPIDE D'UNE TÔLE EN ACIER

(30) Priorität: 22.11.2016 DE 102016122540
(43) Veröffentlichungstag der Anmeldung: 02.10.2019
(73) Patentinhaber: voestalpine Stahl GmbH, 4020 Linz (AT); voestalpine Metal Forming GmbH, 3500 Krems an der Donau (AT)
(72) Erfinder: HASLMAYR, Michael, 4048 Puchenau (AT); ROUET, Christian, 3494 Gedersdorf (AT); SOMMER, Andreas, 73453 Abtsgmünd (DE)
(74) Vertreter: HGF
(86) Internationale Anmeldenummer: PCT/EP2017/079679
(87) Internationale Veröffentlichungsnummer: WO 2018/095825

(56) Entgegenhaltungen:
- EP-A2- 2 365 100
- DE-A1- 3 536 609
- DE-A1- 19 501 873
- DE-A1-102010 049 640
- DE-A1-102012 021 087
- DE-B3-102011 053 698
- DE-B3-102014 114 394
- DE-B4-102010 049 640
- DE-T2- 3 875 526
- JP-A- S6 250 407

## Beschreibung

Die Erfindung betrifft ein Verfahren zum raschen Erwärmen von Stahlblech, wie Stahlblechplatinen nach dem Oberbegriff des Anspruchs 1.

Im Automobilbereich werden zur Erhöhung der Steifigkeit der Fahrgastzelle einerseits und zum Herabsetzen des Gewichts der Karosserie andererseits hochfeste Stahlteile eingesetzt, insbesondere als Längsträger, Schweller, Karosseriesäulen und dergleichen.

Für die Herstellung derartiger hochfester Bauteile werden grundsätzlich Stahlsorten verwendet, insbesondere so genannte Bor-Mangan-Stähle verwendet, die durch ein Austenitisieren des Stahls und anschließendes Abschrecken mit einer Geschwindigkeit über der kritischen Härtegeschwindigkeit, die in etwa bei 20 bis 25 K/sec liegt, gehärtet werden. Hierbei wird ein austenitisches Hochtemperaturgefüge des Stahles beim Abschreckhärten in ein überwiegend martensitisches Gefüge umgewandelt, welches eine hohe Härte und Zugfestigkeit bis hin zu 1500 MPa und mehr aufweist.

Es ist ferner bekannt, derartige Bauteile über die Länge oder die Breite mit Zonen unterschiedlicher Härte auszubilden. Dies kann dadurch erzeugt werden, dass bestimmte Bereiche der Platine nicht austenitisiert werden, so dass sie beim Abschreckhärten nicht martensitisch werden oder diese Teile nicht so schnell abgeschreckt werden, so dass sich dort lokal keine martensitische Struktur ergibt.

Generell sind zwei Verfahrensvarianten für die Herstellung dieser gehärteten Bauteile bekannt, es handelt sich hierbei einerseits um das Presshärten und andererseits um das Formhärten.

Beim Presshärten wird eine üblicherweise ebene Platine durch Erhitzen auf eine Temperatur oberhalb der Austenitisierungstemperatur (Ac₃) teilweise oder vollständig austenitisiert, anschließend in ein Warmumformwerkzeug überführt und im Warmumformwerkzeug mit einem einzelnen Pressenhub umgeformt und durch den Kontakt mit dem kalten Werkzeug gleichzeitig gehärtet.

Beim Formhärten wird eine ebene Platine zunächst kalt umgeformt, zum Beispiel in einer an sich bekannten mehrstufigen Pressenstraße und anschließend das umgeformte Bauteil auf die Austenitisierungstemperatur erhitzt und dann in einem Formhärtewerkzeug abgeschreckt und gehärtet. Im Formhärtewerkzeug findet hierbei keine oder zumindest keine nennenswerte Umformung mehr statt, sondern das Bauteil wird lediglich durch das vollflächige Anliegen an dem Werkzeug abgeschreckt.

Es ist darüber hinaus bekannt, derartige Stahlblechplatinen auch mit einer Vorbeschichtung aus einem Metall oder einer Metalllegierung zu verwenden. Dies können beispielsweise bekannte Aluminierungen, insbesondere Feueraluminierungen oder bekannte Verzinkungen, insbesondere Feuerverzinkungen sein.

Grundsätzlich besteht ein Bestreben die Erhitzung derartiger Platinen oder Bauteile möglichst schnell vonstattengehen zu lassen und andererseits derartige Bauteile nicht länger als notwendig der Hitze auszusetzen.

Für die Erwärmung stehen unterschiedliche Technologien zur Verfügung, wobei die gängigste Methode Durchlauföfen sind, durch die die Platinen insbesondere auf Gestellen geführt werden. Hierbei werden die Öfen mit offenen Brennern oder mit Brennerflammen in Strahlrohren oder elektrisch beheizt. Darüber hinaus ist es bekannt, Stahlblechplatinen induktiv aufzuheizen oder durch direkten Kontakt mit heißen Platten.

Aus der DE 10 2011 053 698 B3 ist ein Verfahren zur Herstellung von Struktur- und Chassisbauteilen durch Warmformen und Erwärmungsstation bekannt, wobei das Verfahren vorsieht, insbesondere Struktur- oder Chassisbauteile für ein Kraftfahrzeug durch Warm- oder Halbwarmumformen in eine gewünschte Form zu bringen, wobei eine Blechplatine in einer Erwärmungsstation wenigstens in einem ersten Bereich von einer Ausgangstemperatur auf eine Zieltemperatur erwärmt wird und anschließend die warme Platine in ein gekühltes Presswerkzeug überführt und darin umgeformt und pressgehärtet wird, wobei die Erwärmungsstation wenigstens eine Brennerzone mit wenigstens einem Brenner umfasst, in welcher die Blechplatine von der Ausgangstemperatur auf die Zieltemperatur erwärmt wird und wenigstens ein Brenner mit einem Brenngas und einem sauerstoffhaltigen Gas betrieben wird und die Blechplatine in direkten Kontakt mit der Brennerflamme kommt. Die Zieltemperatur soll dabei im Wesentlichen der Austenitisierungstemperatur des Grundwerkstoffs der Blechplatine entsprechen, die also auf Größe Ac₃ erwärmen. Die Blechplatine wird durch die Brenner mit hoher Geschwindigkeit und extrem hohem Wirkungsgrad erwärmt, dadurch dass die Platine in direktem Kontakt mit dem turbulent auf die Blechplatine stoßenden Brennerflammen steht und insbesondere vollumfänglich von den Flammen umhüllt wird. Hierdurch soll es möglich sein, einen sehr gleichmäßigen Temperaturverlauf in der Blechplatine einzustellen und somit auch eine gleichmäßige Oberflächenbeschaffenheit im Falle von vorbeschichtetem Material, sowie eine gleichmäßige Gefügeumwandlung zu erreichen. Insbesondere ist vorgesehen, die Erwärmungsstation derart zu gestalten, dass mehrere Brenner innerhalb wenigstens eines Brennerfeldes voneinander beabstandet angeordnet sind, wobei der Abstand zwischen den Brennern größer 30 mm ist. Dies soll einen ausreichenden Sicherheitsabstand zum Schutz vor gegenseitiger Beflammung, insbesondere aufgrund von Flammenrückschlag an der Blechplatine bewirken, andererseits aber auch eine ausreichend hohe Wärmestromdichte von 250 bis 2000 kW /m². Hierbei kann es vorgesehen sein, dass das Brennerfeld beweglich angeordnet ist und beispielsweise eine oszillierende Bewegung parallel der Ebene der Blechplatine vollzieht. Zudem soll es möglich sein, einzelne Brenner der Erwärmungsstation bezüglich der Höhe über der Blechplatine zu verstellen, so dass das Brennerfeld selbst nur durch die aktiven, nicht von der Platine zurückgesetzten Brenner gebildet wird.

Aus der DE 10 2010 049 640 B4 ist ein Werkzeug zum partiellen Wärmebehandeln eines metallischen Bauteils und Verfahren zum partiellen Wärmebehandeln eines metallischen Bauteils bekannt. Geschaffen werden soll ein Verfahren zum partiellen Wärmebehandeln und ein Werkzeug zur Durchführung des Verfahrens, bei dem die partiellen Wärmebehandlungsmöglichkeiten gegenüber bekannten Wärmebehandlungsmöglichkeiten mittels Induktion verbessert sind. Hierbei besitzt das Werkzeug einen ersten Induktor, welcher über einem Bereich angeordnet ist, in dem die partielle Wärmebehandlung erfolgen soll und ein Abstand A zu diesem Bereich besitzt, wobei auf der gegenüberliegenden Seite des Bereichs ein zweiter Induktor angeordnet ist. Bei den in dieser Schrift offenbarten Induktoren handelt es sich um sogenannte Flächeninduktoren.

Aus der DE 10 2012 021 087 A1 ist ein Verfahren zur induktiven Erwärmung von Werkstücken bekannt, wobei das zu erwärmende Werkstück mit Hilfe eines ersten Induktors und zugleich mit Hilfe eines zweiten Induktors zumindest bereichsweise induktiv erwärmt wird. Der erste und der zweite Induktor sind hierbei auf gegenüberliegenden Seiten des Werkstücks und- in einer Richtung parallel zu einem zu erwärmenden Flächenabschnitt des Werkstücks - derart relativ zueinander versetzt angeordnet, dass Windungen des ersten Induktors - in Draufsicht gesehen - zwischen Windungen des zweiten Induktors angeordnet sind.

Aus der JP S62 50407 A ist ein Verfahren zur Verbesserung der Durchwärmung einer Metallplatte bekannt. Zum Erwärmen werden mehrere lineare Heizelemente parallel angeordnet, eine Metallplatte wird unter dem Heizelement platziert, und das Heizelement wird in einer Richtung orthogonal zur Achse des Heizelements und in einer Ebene parallel zur Oberfläche der Metallplatte in Schwingung versetzt.

Ansonsten sind aus dem Stand der Technik die Erwärmung im Strahlungsofen bei etwa 910°C, Erdgas-Sauerstoff-Linienbrenner sowie Porenbrenner als Flächenbrenner bekannt, welche jedoch keine Strahlungswärme und keine Konvektion erzeugen, mit einem überhitzten Strahlungsofen vergleichbar sind.

Bei Strahlungsöfen ist von Nachteil, dass sie einen großen Flächenbedarf haben und die Erwärmung relativ langsam stattfindet. Bei Erdgas-Sauerstoff-Linienbrennern ist von Nachteil, dass diese zwar eine hohe Leistungsdichte haben, für Formzuschnitte aber ungeeignet sind. Sogenannte Porenbrenner haben eine geringe Leistungsdichte im Dauerbetrieb.

Aufgabe der Erfindung ist es, ein Verfahren zum raschen Erwärmen von Stahlblechplatinen zu schaffen, mit denen diese schnell und im aufzuheizenden Bereich homogen erhitzt werden.

Die Aufgabe wird mit einem Verfahren mit den Merkmalen des Anspruchs 1 gelöst.

Vorteilhafte Weiterbildungen sind in den hiervon abhängigen Unteransprüchen gekennzeichnet.

Erfindungsgemäß wird die Wärme in die Platine punktförmig eingebracht, wobei eine oszillierende Relativbewegung zwischen Brenner und Platine stattfindet. Es hat sich herausgestellt, dass die Temperaturverteilung hierdurch besonders gut homogenisiert werden kann.

Erfindungsgemäß wird eine überlagerte Oszillation durchgeführt, translatorisch, rotatorisch oder eine Kombination von beiden, bei der eine Grundschwingung von einer höher frequenten Oberschwingung überlagert wird.

Besonders bevorzugt sind möglichst gleichmäßige Bewegungen um die Beschleunigungskräfte gering zu halten, beispielsweise möglichst kreisförmige, linear sinusförmige oder doppelt kreisförmige Oszillationsmuster.

Um die Wärme bzw. Energie in die Platine einzubringen, werden Flächenbrenner verwendet, die einseitig oder beidseitig auf die Platine einwirken.

Alternativ hierzu können insbesondere punktförmig erwärmend wirkende Querfeldinduktoren eingesetzt werden, die sich beidseitig der Platine befinden und punktförmig auf diese einwirken (im Gegensatz zu Flächeninduktoren).

Hierbei erfolgt die Schnellerwärmung bis zur Zieltemperatur von >870°C (Ac₃ des Stahlgrundmaterials) sehr homogen, wobei erfindungsgemäß alternativ eine Vorerwärmung sehr homogen bis zur maximal möglichen Temperatur erfolgt und eine Nachhomogenisierung im 910°C heißen Strahlungsofen erfolgen kann.

Erfindungsgemäß erfolgt die Oszillation durch eine Oszillation der Platine bzw. des Platinenträgers. Der Frequenzbereich der Oszillation reicht von 0,46 bis 4,7 Hz und das Verhältnis der Grundschwingung zur Oberschwingung beträgt 1:1 bis 1:10, vorzugsweise mindestens 1:5.

Besonders vorteilhaft ist dieses Verfahren bei der Herstellung von TPP Bauteilen.

Die Erfindung wird anhand einer Zeichnung beispielhaft erläutert. Es zeigen dabei:
- Figur 1: stark schematisiert, ausschnittsweise eine Brenneranordnung nach einem Versuchsaufbau;
- Figur 2: die Anordnung nach Figur 1 in einer seitlichen Ansicht;
- Figur 3: die Anordnung nach Figur 2 in einer Ansicht von unten;
- Figur 4: ein Brennerfeld in einer Draufsicht;
- Figur 5: die Anordnung eines Brennerfeldes als integraler Bestandteil eines Strahlungsofens;
- Figur 6: eine Wärmebilddarstellung der Wärmeverteilung bei einer überlagerten Oszillation der Platine;
- Figur 7: stark schematisiert die zeichnerische Darstellung der Oszillationsbewegung;
- Figur 8: die Inhomogenität der Wärmeverteilung über die Amplitude der Bewegung und den Abstand der Brenner;
- Figur 9: die Inhomogenität über den Radius der kleinen Schwingung im Verhältnis zum Radius der großen Schwingung;
- Figur 10: stark schematisiert eine Vorrichtung mit Brennern;
- Figur 11: ein wabenartiges Brennerfeld (bevorzugt bei einseitige Erwärmung);
- Figur 12: ein rechteckförmiges Brennerfeld mit versetzt angeordneten Brennern, die von beiden Seiten auf die Platine einwirken;

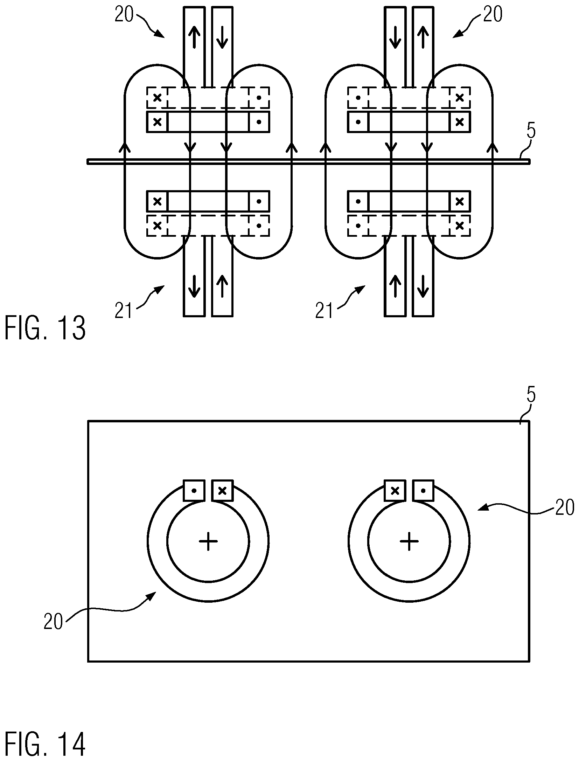

- Figur 13: beidseitig der Platine angeordnete Querfeldinduktoren;
- Figur 14: die Querfeldinduktoren in einer Draufsicht von oben;
- Figur 15: einen Verlauf bei einem konstanten feuernden Flächenbrenner (mit etwa 40% O2 Anteil), wobei bei etwa 750°C die Umwandlung des Gefüges abgeschlossen ist und daher die Erwärmung wieder stärker ansteigt;
- Figur 16: einen Zeit-Temperatur-Verlauf nach Fig. 15 mit Leistungsreduktion.

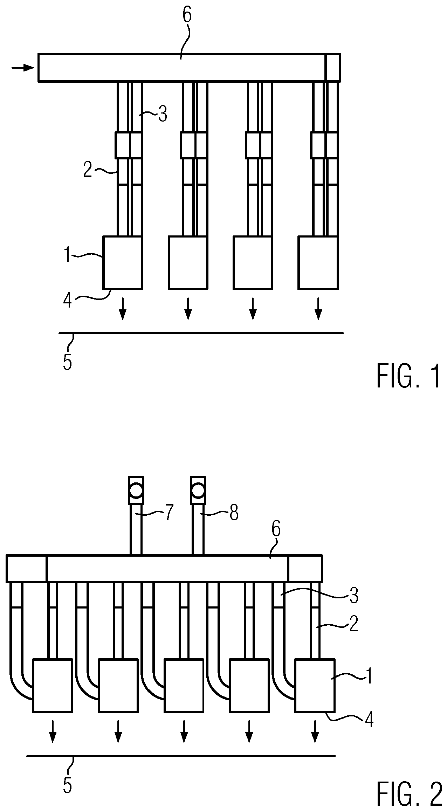

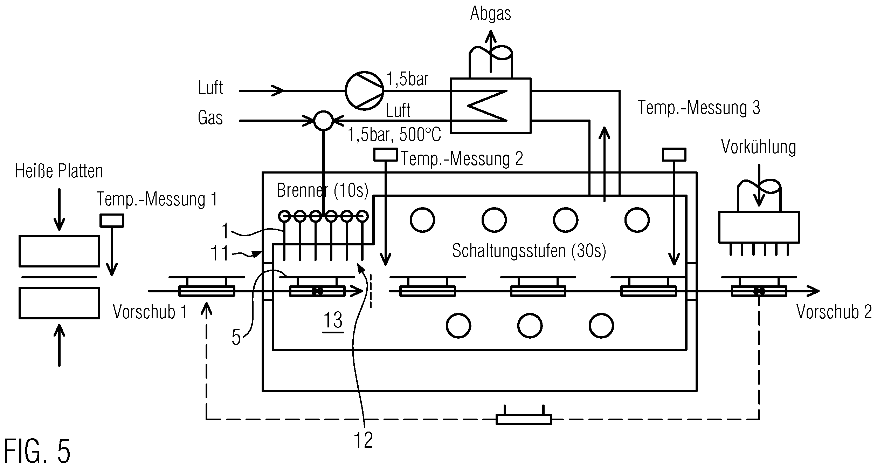

Für die erfindungsgemäße Erwärmung werden beispielsweise Brenner 1 eingesetzt, wobei die Brenner 1 in einem Brennerfeld 11 angeordnet werden (Figuren 1, 5).

Als Brenngas kann beispielsweise Erdgas verwendet werden, optional kann zur Reduktion der Verbrennungstemperatur Luft und/oder Wasser bzw. Wasserdampf beigemischt werden um eine Schädigung (Verbrennung) der Zinkschicht bzw. des Grundmaterials an exponierten Stellen zu vermeiden. Bevorzugt erfolgt die Verbrennung bei 40 % bis 100% Sauerstoffanteil in der Verbrennungsluft. Durch Regelung des Sauerstoffanteils in der Verbrennungsluft kann die Verbrennungstemperatur beeinflusst werden, da die Kühlwirkung des Stickstoffes reduziert werden kann. Insbesondere haben sich Sauerstoffanteile von 21 % (bei "normaler" Luft) bzw. 40 % bis 60 % bewährt.

Des Weiteren kann eine Reduktion der Verbrennungstemperatur also der Brennerleistung kurz vor Erreichen der Zieltemperatur insbesondere 100 °C unter der Zieltemperatur; bsp. bei 800 °C wenn die Zieltemperatur mit 900 °C gewählt wurde, die Robustheit und Homogenität des Erwärmungsprozess erhöhen.

Vorzugsweise werden Brennerköpfe mit einer Leistung von 1 bis 100 kW je Brennerkopf mit einem Durchmesser von 10 bis 100 mm, besonders bevorzugt 30 mm Durchmesser bei 10 kW Leistung je Brennerkopf verwendet.

Die Brenner 1 sind hierbei voneinander beabstandet, wobei zwischen den Brennern 1 (Figuren 2-4) Abstände verbleiben.

Die Abstände zwischen den Brennern 1 sind so gewählt, dass die Brenner punktförmig auf eine Platine einwirken können. Die Abstände sind dabei so bemessen, dass zwischen den Brennern das heiße Brenngas zurückströmen kann, so dass Querströmungen über das gesamte Brennerfeld 11 möglichst vermieden werden. Hierbei kann insbesondere dafür Sorge getragen werden, dass durch eine passive Abgasführung oder ein aktives Absaugen die gewünschte Rückströmung zwischen den Brennern 1 stattfindet. Es haben sich beispielhaft Abstände von 10 bis 100 mm, vorzugsweise 30 mm zwischen den einzelnen Brennerköpfen als vorteilhaft erwiesen. Der Abstand der Platine zu den Brennern kann zwischen 20 bis 80 mm betragen, besonders bevorzugt etwa 50 mm.

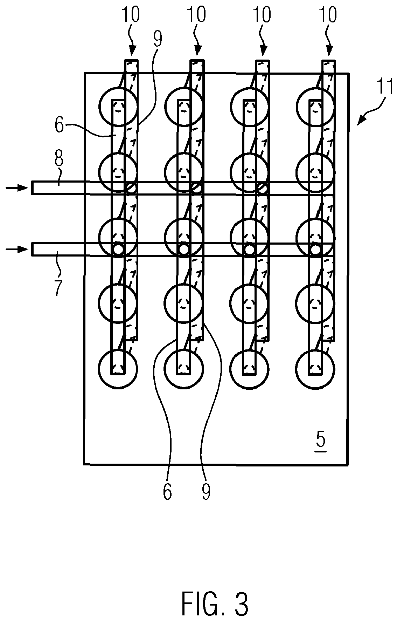

Die Brenner 1 besitzen hierbei insbesondere je eine Zuleitung 2 für Brennstoff und eine Zuleitung 3 für Luft, Sauerstoff oder ein sauerstoffhaltiges Gas, wobei diese Zuleitungen 2, 3 rückseitig und/oder seitlich in den Brenner 3 münden und der Brenner 1 mit seiner platinenseitigen Brennerkopffläche 4 zu einer Platine 5 weist. Eine Mehrzahl von Brennern 1 kann hierbei über eine gemeinsame Versorgungsleitung 6 mit Brennstoff versorgt werden, wobei eine Mehrzahl von gemeinsamen Zuleitungen 6 über eine Brennstoffleitung 7 mit Brennstoff versorgt werden kann (Figur 3).

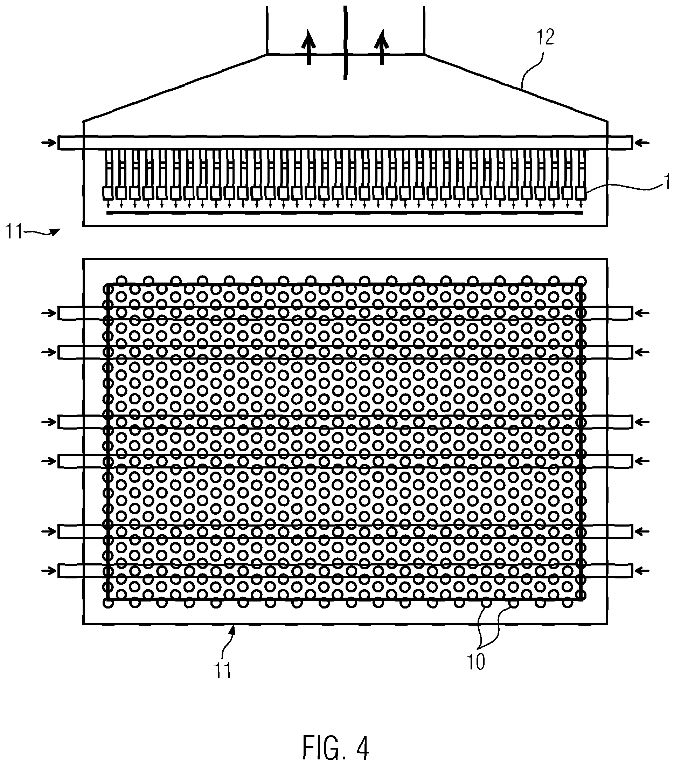

Zudem können die Zuleitungen 3 für Luft, Sauerstoff oder ein sauerstoffhaltiges Gas über eine gemeinsame Zuleitung 9 mit der Luft, dem Sauerstoff oder dem sauerstoffhaltigen Gas versorgt werden, wobei die Leitungen 9 wiederum mit einer Sauerstoff- oder Luftzuleitung 8 versorgt werden. Dem entsprechend können entlang der Leitungen 6, 9 die Brenner als Brennerreihen 10 ausgebildet sein. Die Brennerreihen 10 eines Brennerfeldes 11 können dabei auch versetzt zueinander angeordnet sein (Figur 4).

Die Brenner 1 eines Brennerfeldes 11 können hierbei einzeln, in Reihen und/oder als gesamtes Brennerfeld 11 auf eine Platine 5 zu bewegbar oder von der Platine 5 abhebbar sein. Somit können die Brennerabstände zur Platine einzeln, in Reihen oder als ganzes Brennerfeld geregelt werden.

Bei den Brennern 1 ist es, wie bereits ausgeführt, vorgesehen, dass die Brenngase, die auf die Platine 5 treffen, zwischen den Brennern 1 wieder zurückgeführt werden, um Querströmungen möglichst zu verhindern. Hierzu kann das Brennerfeld 11 über eine entsprechende Einhausung 12 verfügen, die beispielsweise das Brennerfeld 11 umgibt und nach oben kaminartig ausgebildet ist, so dass ein Zug entsteht, der die Brenngase zwischen den Brennern 1 zu einer Richtung hinter den Brennern 1 weg befördert. Hierzu kann insbesondere es auch vorgesehen sein, die Brenngase mit einer entsprechenden Vorrichtung, wie einem Lüfter, aktiv abzusaugen und die heißen Brenngase z. B. entsprechend einem Rekuperator zur Vorwärmung der Brennluft zuzuführen. Besonders effektiv lässt sich dies in einem geschlossenen System z.B. einer temporär verschliessbaren Kammer als Erwärmungszone der Platine realisieren.

Das Brennerfeld 11 kann hierbei alleine dafür vorgesehen sein, eine Platine 5 aufzuheizen. Das Brennerfeld kann jedoch auch innerhalb eines Strahlungsofens angeordnet sein, so dass Platinen, die in den Ofen manipuliert werden, zunächst mit dem Brennerfeld sehr schnell aufgeheizt werden und anschließend in dem Strahlungsbereich bis zur Zieltemperatur aufgeheizt bzw. wärme- und temperaturmäßig vergleichmäßigt werden (Figur 5).

Erfindungsgemäß erfolgt die Aufheizung mit den Brennern 1 nicht alleine durch ein Beaufschlagen der Platine 5 mit Brenngasen aus dem jeweiligen Brenner 1, sondern die Aufheizung wird von einer Bewegungskomponente überlagert. Erfindungsgemäß wurde herausgefunden, dass sich eine besonders gute Homogenisierung der Wärmeverteilung dann erzielen lässt, wenn die Platine während der Beaufschlagung mit den Brennern in ihrer Ebene oszilliert, d.h., in einer Ebene quer zur Ausströmrichtung der Brenner 1.

Erfindungsgemäß hat sich herausgestellt, dass das ein Oszillieren des Brennerfeldes 11 hierbei weniger effektiv ist und zu technischen Nachteilen bei der Brennführung führt.

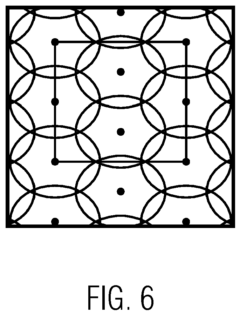

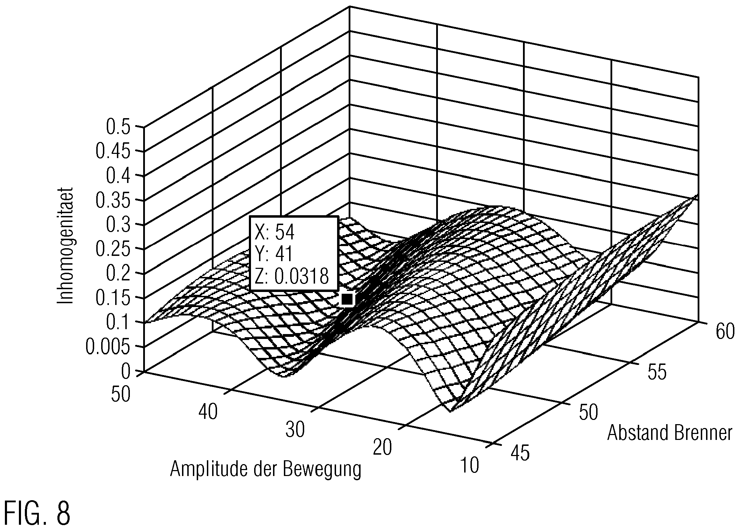

Die Wärmeverteilung durch Oszillation ist in Figur 6 dargestellt, in Figur 8 ist die Amplitude der Bewegung, der Brennerabstand und die Inhomogenität gegeneinander aufgeführt, wobei man erkennt, dass hierbei Inhomogenitätssenken und Inhomogenitätshöhen vorhanden sind, so dass auch durch empirische Versuche eine ideale Amplitude, ein idealer Brennerabstand herausgefunden werden können, welche die Inhomogenität erheblich absenken.

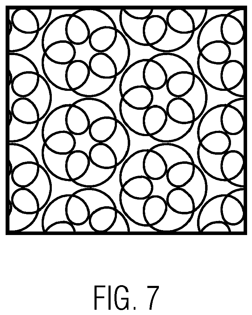

In Figur 7 ist die Oszillation zeichnerisch dargestellt, wobei erfindungsgemäß eine Oszillationsbewegung möglich ist und hierdurch sehr gute Homogenitätswerte erzielt werden.

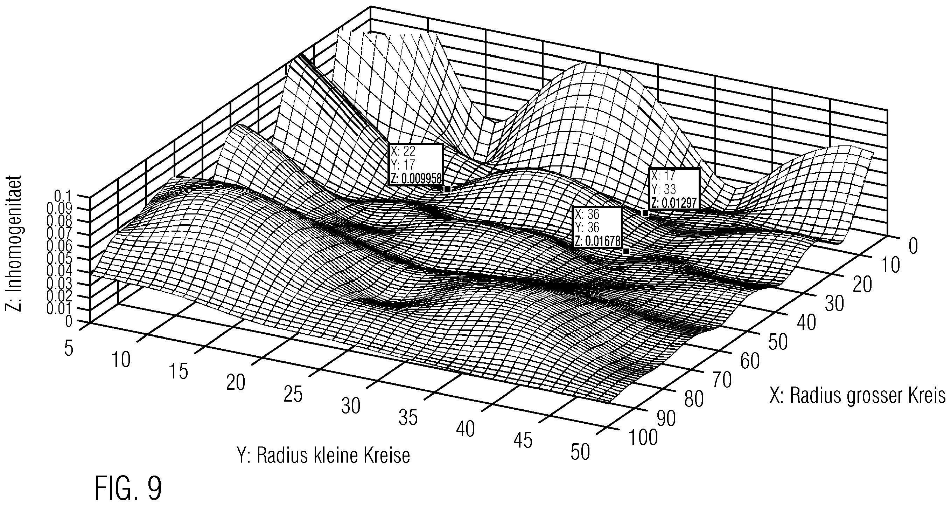

Erfindungsgemäß hat sich herausgestellt, dass die Homogenität besonders gut gelingt, wenn zwei Schwingungen überlagert werden. Beispielsweise wird eine Grundschwingung mit 0,5 Hz von kleinen Schwingungen überlagert, die etwa 2 Hz betragen. Die Schwingbewegung ist hierbei in Figur 7 gezeigt, wobei die Ergebnisse in Figur 9 gegenübergestellt sind. Hier ist wiederum die Inhomogenität gegen den Radius der großen Oszillation und den Radius der kleinen Oszillation abgestimmt, wobei man hier sehr gute Zusammenhänge erkennt und wiederum Inhomogenitätssenken deutlich sichtbar sind, die entsprechend aufgesucht werden können.

Eine entsprechende Anlage 12 außerhalb der beanspruchten Erfindung zur Durchführung der erfindungsgemäßen Beheizung mit Brennern besitzt beispielsweise einen nach unten offenen Ofenraum 13, wobei durch eine Ofendecke 14 die Brenner 1 durchgreifend in den Innenraum ragen. Zudem sind Seitenwandungen 15 vorhanden, welche Abgasaustritte 16 besitzen.

Diese Anlage ist nach Art eines Haubenofens ausgebildet, wobei ein Ofenboden 17 anhebbar und absenkbar ist (oder die Haube, gebildet aus den Wandungen 14, 15 abhebbar ist), wobei auf dem Boden 17 ein Schwingtisch 18 angeordnet ist, auf den eine Platine 5 auf ein entsprechendes Aufnahmegestellt 19 ablegbar ist. Der Schwingtisch 18 kann die oszillierende oder überlagert oszillierende Bewegung ausführen. Nach Abschluss der Erwärmung wird der Ofenboden nach unten abgesenkt und die Platine insbesondere robotisch entnommen und zur Weiterverarbeitung manipuliert.

Ein Brennerfeld 11 kann hierbei, wie bereits ausgeführt, über versetzt zueinander angeordnete Brennerreihen 10 mit Brennern 1 verfügen, wobei die Brenner 1 nach beispielsweise einem Wabenmuster einseitig auf eine Platine einwirken. Vorteilhaft bei der einseitigen Erwärmung ist die Möglichkeit des Auflegens der Platine auf einen oszillierbaren Trägerkörper. Dieser Trägerkörper kann zusätzlich beheizt sein um die Erwärmung weiter zu beschleunigen.

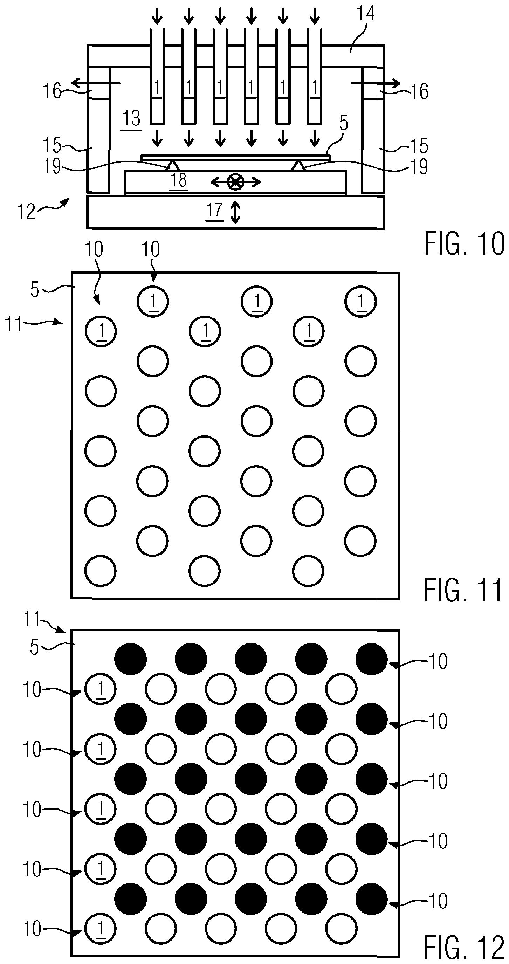

Die Brennerreihen 10 können auch nicht zueinander versetzt auf einer Seite der Platine einwirken, wobei weitere Brenner (in Figur 12 schwarz dargestellt) auf einer Unterseite der Platine auf die Platine einwirken, wobei die Brennerreihen 10 der Unterseite und der Oberseite entsprechend so versetzt angeordnet sind, dass die Brenner der Unterseite in die Zwickel, d.h. die Mittelpunkte der von den Brennern der Oberseite nicht erwärmten Zonen bzw. die Schnittpunkte der Brenner der Oberseite zwischen den Brennern der Oberseite hineinfeuern. Hierzu ist es erfindungsgemäß vorgesehen, die Platine in den Randbereichen zu halten und die Halterung entsprechend oszillierend anzusteuern.

Neben der erfindungsgemäßen Aufheizung mit Brennern 1 ist es auch möglich, die Aufheizung mit Querfeldinduktoren durchzuführen. Hierbei sind die Querfeldinduktoren 20, 21 oberhalb und unterhalb der Platinenebene angeordnet und wirken gemeinsam, eine entsprechende Induktion erzeugend, auf die Platine 5, ähnlich wie die Brenner punktförmig ein. Dem entsprechend ist eine Mehrzahl von Induktoren 20 zu Induktorreihen (nicht gezeigt) zusammengefasst und mehrere Induktorreihen ergeben ein Induktorfeld, wobei ein Induktorfeld auf der Oberseite der Platine und ein Induktorfeld mit Induktoren 21 unterhalb der Platine angeordnet ist, wobei immer ein Induktor 20 fluchtend zu einem Induktor 21 angeordnet ist.

Auch bei dieser der Vorrichtung außerhalb der beanspruchten Erfindung wird die Platine oszilliert und vorzugsweise überlagert oszilliert.

Bei der Erfindung ist von Vorteil, dass sowohl bei der solitären Beheizung einer Platine mit einem Brennfeld, wobei die Platine oszilliert, eine hervorragende homogene Wärmeverteilung erzielt wird, wobei die Beheizung in sehr kurzer Zeit, d.h. mit hoher Geschwindigkeit und daher schonend für das aufzuheizende Metall stattfindet. Hierbei kann das Brennerfeld alleine oder im Zusammenwirken mit einer nachgeordneten Strahlungsbeheizung arbeiten.

In vorteilhafter Weise kann auch ein Feld von Querfeldinduktoren entsprechend eingesetzt werden und entweder alleine oder mit einem nachgeordneten Strahlungsaufheizen zusammen arbeiten.

Ein weiterer Vorteil der Verwendung der Brennerfelder oder Querfeldinduktorenfelder ist, dass bei einer Unterbrechung des Prozesses aufgrund von Ausfällen, Wartungsarbeiten oder dergleichen im Gegensatz zum Stand der Technik keine Platinen in einem Ofen verbleiben, dort zu lange aufgeheizt und dann verworfen werden müssen, sondern das Aufheizen der Platinen, welches sehr schnell erfolgt, einfach eingestellt wird und abgewartet wird, bis die Linie wieder frei produzieren kann. Hierdurch wird Ausschuss vermieden bzw. verringert.

Bei der Verwendung von einzeln abhebbaren Brennern oder einzeln abhebbaren Brennerreihen ist von Vorteil, dass durch eine entsprechende Ausgestaltung des Brennerfeldes mit zur Platine feuernden Brennern und abgehobenen, nicht zur Platine feuernden Brennern, Teile mit unterschiedlichen mechanischen Eigenschaften dadurch hergestellt werden können, dass bestimmte Bereiche der Platine nicht aufgeheizt und damit nicht austenitisiert werden und somit auch beim Abschrecken nicht gehärtet werden können.

Diese sogenannten TPP Bauteile (tailored property parts) können besonders effektiv hergestellt werden, wenn in den Bereichen der Platine die nicht austenitisiert werden sollen nicht nur die Brenner entfernt werden bzw. nicht aufheizen sondern darüber hinaus bereichsweise eine Kühlvorrichtung bsp. Kühldüsen vorgesehen ist um eine aktive Kühlung dieses Bereichs zu gewährleisten. Anstelle des Entfernens eines oder mehrerer Brenner können diese auch abgeschaltet und von Kühlgas durchströmt werden, so dass der Brenner als Kühldüse dient.

Hierbei hat sich herausgestellt, dass die erfindungsgemäße Anordnung von Brennern und die erfindungsgemäße Oszillation zusätzlich eine hohe Trennschärfe zwischen nicht aufgeheizten, nicht zu härtenden Bereichen und aufgeheizten und zu härtenden Bereichen ermöglicht.

In gleicher Weise können selbstverständlich Querfeldinduktoren in Bereichen, die nicht aufgeheizt werden sollen, abgeschaltet werden, so dass hier keine Induktion und damit auch keine Erhitzung stattfindet. Auch hierbei kann durch die Verwendung der Querfeldinduktoren Felder mit abgeschalteten Querfeldinduktoren und der überlagerten Oszillation eine sehr große Trennschärfe erreicht werden.

Selbstverständlich ist die Schnellerwärmungseinrichtung außerhalb der beanspruchten Erfindung nicht nur zur Erwärmung von Stahlblechplatinen geeignet sondern kann auch zur Erwärmung von Stahlblechprofilen oder Rohre angewandt werden.

Hierzu wird bevorzugt im sogenannten "stop and go" Verfahren eine entsprechende oszillierende Erwärmung vorgenommen.

Besonders vorteilhaft ist dieses Verfahren bei der Herstellung von TPP Bauteilen.

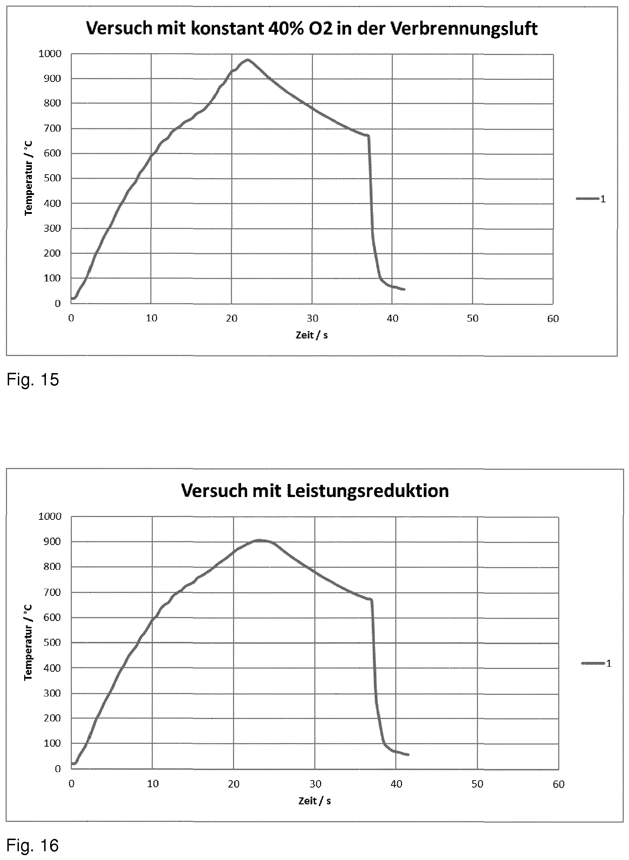

Die Figuren 15 und 16 zeigen Zeit-Temperatur-Verläufe, welche beispielhaft den Temperaturverlauf einer Aufheizung für eine Platine zeigen.

Figur 15 zeigt einen Verlauf bei einem konstanten feuernden Flächenbrenner (mit etwa 40% O2 Anteil), man erkennt auch sehr gut, dass bei etwa 750°C die Umwandlung des Gefüges abgeschlossen ist und daher die Erwärmung wieder stärker ansteigt.

Diesen Effekt kann man minimieren, wenn eine Regelung entweder den Sauerstoffanteil reduziert und/oder generell die Befeuerung reduziert wird um eine homogenere Aufheizung zu ermöglichen (siehe Figur 16).

Selbstverständlich kann eine solche reduzierte Aufheizung noch stärker gedrosselt werden bzw. früher anfangen, in diesem Fall wurde etwa 200°C vor Erreichung der TZiel mit der Reduzierung der Aufheizung begonnen.

## Patentansprüche

1. Verfahren zum Schnellerwärmen von Stahlblechplatinen zum Zwecke des Warmumformens und Presshärtens, wobei zum Erwärmen von Stahlblechplatinen Erwärmungseinrichtungen (1, 20, 21) vorhanden sind, und die Erwärmungseinrichtungen (1, 20, 21) jeweils flächenmäßig begrenzt ein Aufheizen der Stahlblechplatine, bewirkend auf die Stahlblechplatine, einwirken, wobei die Platine quer zur Einwirkungsrichtung oszilliert, wobei der Frequenzbereich der Oszillation von 0,46 bis 4,7 Hz reicht, insbesondere von 0,55 bis 2,7 Hz, wobei die Oszillation aus einer Mehrzahl überlagerter Schwingungen mit unterschiedlichen Frequenzen besteht, wobei die Oszillation translatorisch, rotatorisch oder eine Kombination von beiden ist, bei der eine Grundschwingung von einer höher frequenten Oberschwingung überlagert wird.

2. Verfahren nach Anspruch 1, wobei das Verhältnis der Grundschwingung zur Oberschwingung von 1:5 bis 1:10 beträgt.

3. Verfahren nach Anspruch 1 oder 2, wobei die Einrichtungen zum Erzeugen der Erwärmung (1, 20, 21) in Reihen angeordnet sind und eine Mehrzahl von Reihen zu einem Brennerfeld (11) oder Feld von Querfeldinduktoren ausgebildet ist, oder wobei die Einrichtung zum Bewirken der Erwärmung ein Brenner (1) ist.

4. Verfahren nach Anspruch 3, wobei mit den Brennern (1) beidseitig auf die Platine zum Zwecke der Abschreckhärtung eingewirkt wird.

5. Verfahren nach einem der vorhergehenden Ansprüche, wobei die Einrichtungen zum Bewirken der Erwärmung (1, 20, 21) in einem Rechteck oder Wabenmuster verteilt angeordnet werden.

6. Verfahren nach einem der vorhergehenden Ansprüche, wobei einzelne Einrichtungen zum Bewirken der Erwärmung abgeschaltet und/oder von der Platine abgehoben werden können, um im Bereich der abgeschalteten oder abgehobenen Einrichtung keine Erwärmung zu bewirken, wobei die Einrichtungen (1, 20, 21) einzeln abschaltbar oder abhebbar oder in Reihen (10) abschaltbar oder abhebbar oder in beliebigen Mustern abhebbar und/oder abschaltbar sind, um Bereiche der Platine nicht zu erwärmen, die nicht gehärtet werden sollen.

7. Verfahren nach einem der vorhergehenden Ansprüche, wobei in den Bereichen der Platine die nicht austenitisiert werden bereichsweise zumindest eine Kühleinrichtung bspw. zumindest eine Kühldüse vorgesehen ist um eine aktive Kühlung dieses Bereichs zu gewährleisten.

8. Verfahren nach Anspruch 7, wobei die Kühlung durch zumindest durch einen Brenner strömendes Kühlgas bewirkt wird.

## Claims

1. Method for the rapid heating of sheet steel blanks for the purpose of hot forming and press hardening, wherein heating devices (1, 20, 21) are present for heating sheet steel blanks, and the heating devices (1, 20, 21) respectively act in a limited area to heat the sheet steel blank, acting on the sheet steel blank, wherein the blank oscillates transversely to the direction of action, wherein the frequency range of the oscillation ranges from 0.46 to 4.7 Hz, in particular from 0.55 to 2.7 Hz, wherein the oscillation consists of a plurality of superimposed vibrations with different frequencies, wherein the oscillation is translational, rotational or a combination of both, in which a fundamental is superimposed by a higher frequency harmonic.

2. Method according to Claim 1, wherein the ratio of the fundamental to the harmonic is 1:5 to 1:10.

3. Method according to Claim 1 or 2, wherein the devices for generating the heating (1, 20, 21) are arranged in rows and a plurality of rows is formed into a burner field (11) or field of cross-field inductors, or wherein the device for producing heating is a burner (1).

4. Method according to Claim 3, wherein the burners (1) act on both sides of the blank for the purpose of quench hardening.

5. Method according to one of the preceding claims, wherein the devices for producing heating (1, 20, 21) are arranged distributed in a rectangle or honeycomb pattern.

6. Method according to one of the preceding claims, wherein individual devices for producing heating can be switched off and/or lifted off the blank in order for no heat to be produced in the area of the device that has been switched off or lifted off, wherein the devices (1, 20, 21) can be individually switched off or lifted off or switched off or lifted off in rows (10) or lifted off and/or switched off in any pattern in order to not heat areas of the blank that are not to be hardened.

7. Method according to one of the preceding claims, wherein in the areas of the blank that are not austenitised, at least one cooling device, for example at least one cooling nozzle, is provided in areas in order to ensure active cooling of this area.

8. Method according to Claim 7, wherein the cooling is achieved by cooling gas flowing through at least one burner.

## Revendications

1. Procédé de réchauffage rapide de platines en feuille d'acier au fin de formage à chaud et de trempe à la presse, des dispositifs de réchauffage (1, 20, 21) étant présents pour réchauffer des platines en feuille d'acier, et les dispositifs de réchauffage (1, 20, 21) opérant réchauffage, respectivement limité en surface, de la platine en feuille d'acier, en agissant sur la platine en feuille d'acier, la platine oscillant transversalement à la direction d'action, la plage de fréquences de l'oscillation s'étendant de 0,46 à 4,7 Hz, en particulier de 0,55 à 2,7 Hz, l'oscillation étant constituée d'une pluralité d'oscillations superposées de fréquences différentes, l'oscillation étant de type translationnel, rotationnel ou une combinaison des deux, dans laquelle une oscillation fondamentale est superposée à une oscillation harmonique de fréquence plus élevée.

2. Procédé selon la revendication 1, dans lequel le rapport de l'oscillation fondamentale à l'oscillation harmonique est de 1:5 à 1:10.

3. Procédé selon la revendication 1 ou 2, dans lequel les dispositifs pour produire le réchauffage (1, 20, 21) sont disposés en rangées et une pluralité de rangées est formée en un champ de brûleur (11) ou un champ d'inducteurs à champ transversal, ou dans lequel le dispositif pour produire le réchauffage est un brûleur (1).

4. Procédé selon la revendication 3, dans lequel les brûleurs (1) agissent sur les deux côtés de la platine au fin du durcissement par trempe.

5. Procédé selon l'une des revendications précédentes, dans lequel les dispositifs pour réaliser le réchauffage (1, 20, 21) sont répartis selon un rectangle ou un motif alvéolaire.

6. Procédé selon l'une des revendications précédentes, dans lequel des dispositifs individuels destinés à provoquer le réchauffement peuvent être désactivés et/ou soulevés de la platine afin de ne pas provoquer de réchauffement dans la zone du dispositif désactivé ou soulevé, les dispositifs (1, 20, 21) pouvant être désactivés ou soulevés individuellement ou pouvant être désactivés ou soulevés en rangées (10) ou pouvant être soulevés et/ou désactivés selon des motifs quelconques afin de ne pas rééchauffer des zones de la platine qui ne doivent pas être trempées.

7. Procédé selon l'une des revendications précédentes, dans lequel, dans les zones de la platine qui ne sont pas austénitisées, il est prévu par endroits au moins un dispositif de refroidissement, par exemple au moins une buse de refroidissement, pour garantir un refroidissement actif de cette zone.

8. Procédé selon la revendication 7, dans lequel le refroidissement est effectué par un gaz de refroidissement s'écoulant à travers au moins un brûleur.
